# EUROPÄISCHE PATENTSCHRIFT

(11) **EP 3 204 831 B1**
(45) Veröffentlichungstag und Bekanntmachung des Hinweises auf die Patenterteilung: **03.06.2020**
(21) Anmeldenummer: 15804504.7
(22) Anmeldetag: 03.12.2015
(51) Int. Cl.: G05B 19/042, G06F 9/44

(54) **VERFAHREN ZUR NACHVERFOLGBAREN PROGRAMMIERUNG UND KONFIGURIERUNG EINES GERÄTS**
METHOD FOR PROGRAMMING AND CONFIGURING A DEVICE IN A TRACEABLE MANNER
PROCÉDÉ DE PROGRAMMATION ET DE CONFIGURATION TRAÇABLES D'UN APPAREIL

(30) Priorität: 05.12.2014 DE 102014118042
(43) Veröffentlichungstag der Anmeldung: 16.08.2017
(73) Patentinhaber: Schneider Electric Automation GmbH, 97828 Marktheidenfeld (DE)
(72) Erfinder: JUERGENSEN, Leif, 97295 Waldbrunn (DE); BEUDERT, Rainer, 97249 Eisingen (DE)
(74) Vertreter: Manitz Finsterwald Patent- und Rechtsanwaltspartnerschaft mbB
(86) Internationale Anmeldenummer: PCT/EP2015/078518
(87) Internationale Veröffentlichungsnummer: WO 2016/087585

(56) Entgegenhaltungen:
- US-A1- 2012 180 024
- US-A1- 2013 287 208
- US-A1- 2014 058 532

## Beschreibung

Die vorliegende Erfindung betrifft ein Verfahren zur nachverfolgbaren Programmierung und Konfigurierung eines Geräts, insbesondere eines Embedded-Geräts.

Embedded-Geräte wie z.B. speicherprogrammierbare Steuerungen (SPS), Programmable Logic Controller (PLC) oder generell Automatisierungsgeräte, wie z.B. Servoantriebe und Frequenzumrichter kommen in einer Vielzahl von Anwendungen zum Einsatz und steuern beispielsweise automatisierte Prozesse in Industriemaschinen oder Robotern. Ein Embedded-Gerät kann in diesem Zusammenhang auch als Device bezeichnet werden.

Bei der Entwicklung von Soft- und Firmware für derartige Geräte wird üblicherweise von mehreren Entwicklern an der Erstellung der Applikation für ein Gerät gearbeitet. Bei der parallelen Arbeit an Projekten kann es leicht zu Unstimmigkeiten in der Synchronisierung der Softwareversionen kommen. Deshalb werden Gegenmaßnahmen ergriffen um inkonsistente Softwareversionen zu vermeiden. Dazu werden z.B. Versionsverwaltungssysteme eingesetzt, mit denen sich nachvollziehen lässt, welcher Entwickler welche Version einer Software erstellt hat. Zudem werden Arbeitsvorschriften für vorbestimmte Standardabläufe (Standard Operating Procedures - SOPs) eingesetzt, um unerwünschte Konflikte zwischen mehreren parallelen Versionen der Soft- bzw. Firmware zu vermeiden.

In der Praxis zeigt sich jedoch häufig, dass trotz der Versionsverwaltungssysteme und der Arbeitsvorschriften die Konsistenz der entstehenden Software bzw. des Quellcodes der Software nicht garantiert werden kann.

Insbesondere bei der Entwicklung von Soft- und Firmware für Embedded-Geräte, muss die erstellte Software auf das Embedded-Gerät heruntergeladen werden. Um einen Zusammenhang zwischen der auf dem Embedded-Gerät befindlichen Software, die dort als ausführbarer Code (Executable) vorliegt und dem zugehörigen Quellcode zu schaffen, wird der Quellcode häufig ebenfalls auf das Embedded-Gerät heruntergeladen.

Wird nun nach der Erstellung einer neuen Softwareversion nur der ausführbare Code neu auf das Embedded-Gerät heruntergeladen, so entsteht eine Unstimmigkeit zwischen dem auf dem Embedded-Gerät vorhandenen Quellcode und dem dort vorhandenen ausführbaren Code. Diese Unstimmigkeit kann sich in dem weiteren Entwicklungsprozess der Software fortsetzen und zu Fehlern und Inkonsistenzen im Entwicklungsprozess führen.

Bei der Auslieferung von Embedded-Geräten an Kunden werden die Geräte üblicherweise mit der jeweils aktuellsten Software ausgestattet. Um nachverfolgen zu können, welches ausgelieferte Gerät über welche Softwareversion verfügt, werden beispielsweise manuell gepflegte Datenbanken verwendet. Aufgrund der manuellen Pflege kann eine Richtigkeit und Aktualität der Datenbanken nicht garantiert werden. Dies ist insbesondere dann der Fall, wenn die Softwareversionen der Embedded-Geräte nachträglich, z.B. durch Wartungsperson, verändert werden und die Änderungsinformationen nicht in das Versionsverwaltungssystem übertragen werden.

Bei Embedded-Geräten der Automatisierungstechnik ist häufig auch ein sogenannter "Online Change" bzw. ein "Hot Code Swapping" möglich, d.h. dass Applikationscode z.B. bei einer Wartung während des Betriebs des Geräts ausgetauscht wird. Eine konsistente Nachverfolgung des jeweils auf einem Gerät vorhandenen ausführbaren Codes und Quell-Codes wird damit zusätzlich erschwert.

Aus der US 2014/0058532 A1 ist ein Verfahren gemäß dem Oberbegriff des Anspruchs 1 bekannt. Die US 2013/0287208 A1 lehrt die Verwendung einer "Whitelist" mit Hash-Werten, um gewünschte ausführbare Dateien zu identifizieren. Die US 2012/0180024 A1 beschreibt die Verwendung einer Zuordnungstabelle, welche eine Zuordnung zwischen Quell-Code und ausführbaren Dateien ermöglicht.

Es ist die der Erfindung zugrundeliegende Aufgabe, ein Verfahren zur nachverfolgbaren Entwicklung von Soft- und Firmware anzugeben, welches sämtliche Abschnitte eines Lebenszyklus von Soft- und Firmware abdeckt.

Diese Aufgabe wird durch das Verfahren gemäß Anspruch 1 gelöst.

Gemäß der Erfindung wird ein Verfahren zur nachverfolgbaren Programmierung eines Geräts, insbesondere eines Embedded-Geräts, angegeben, bei welchem
a) von einem Programmiersystem auf das Gerät Daten übertragen werden, wobei die übertragenen Daten von dem Gerät ausführbaren Code enthalten und aus einem Quellcode erzeugt sind,
b) auf der Grundlage zumindest eines Teils der übertragenen Daten und zumindest eines Teils des Quellcodes sowie einer Identifikation des Geräts ein erster eindeutiger Identifizierer erzeugt wird,
c) der erste eindeutige Identifizierer in dem Gerät gespeichert wird, und
d) zumindest die für den ersten eindeutigen Identifizierer verwendeten übertragenen Daten, der für den ersten eindeutigen Identifizierer verwendete Quellcode und der erste eindeutige Identifizierer in einer von dem Gerät unabhängigen Speichereinrichtung gespeichert werden.

Der Erfindung liegt die Erkenntnis zugrunde, dass durch die Erzeugung des ersten eindeutigen Identifizierers der auf einem bestimmten Gerät vorliegende ausführbare Code und der zugehörige Quellcode auf einfache Art und Weise identifiziert werden können. Aufgrund der Speicherung des ausführbaren Codes und des Quellcodes in der unabhängigen Speichereinrichtung gemeinsam mit dem ersten eindeutigen Identifizierer wird zudem sichergestellt, dass unabhängig von einem Zugriff auf das Gerät festgestellt werden kann, welcher ausführbare Code und welcher Quellcode mit welchem eindeutigen Identifizierer verknüpft sind. Da die Identifikation des Geräts ebenfalls in den ersten eindeutigen Identifizierer mit eingeht, kann anhand der in der Speichereinrichtung gespeicherten Daten auch nachvollzogen werden, welche Soft- bzw. Firmwareversion, d.h. welcher ausführbare Code, auf einem bestimmten Gerät vorliegt. Zusätzlich kann auch die Identifikation des Geräts in der Speichereinrichtung gespeichert werden.

Vorteilhafterweise kann das Verfahren automatisiert beim Herunterladen von ausführbarem Code auf ein Gerät ausgeführt werden. In der Folge kann ein menschlieher Fehler bei der Pflege der Daten auf der Speichereinrichtung ausgeschlossen werden.

Der erste eindeutige Identifizierer kann entweder von dem Gerät oder von dem Programmiersystem erzeugt werden. Bei dem Gerät handelt es sich bevorzugt um ein Embedded-Gerät, also beispielsweise eine speicherprogrammierbare Steuerung (SPS) bzw. einen Programmable Logic Controller (PLC), die z.B. eine Vielzahl von elektrischen Aktoren steuern. Auch kann es sich bei dem Gerät beispielsweise um Bedienerschnittstellen (HMI - Human Machine Interface), Energiemesssysteme, verteilte Steuersysteme (DCS - Distributed Control System), Frequenzumrichter und/oder Heizungssteuerungen oder dergleichen handeln.

Das Programmiersystem kann aus dem Quellcode durch Kompilieren, Linken und Locaten ausführbaren Code erzeugen. Im Vergleich zu den bisher üblichen Verfahrensweisen kann von dem Programmiersystem auf das Gerät nur der ausführbare Code übertragen werden. Ein Herunterladen von Quellcode auf das Gerät ist nicht mehr zwingend notwendig, da die Verknüpfung des Quellcodes mit dem ausführbaren Code über den in der Speichereinrichtung gespeicherten ersten eindeutigen Identifizierer möglich ist. Auf diese Weise kann Speicherplatz in dem Gerät eingespart werden, wodurch das Gerät kostengünstiger und damit wirtschaftlicher herstellbar ist. Zudem kann der Zeitaufwand der Datenübertragung auf das Gerät reduziert werden, da eine Übertragung des häufig umfangreichen Quellcodes nicht mehr notwendig ist. Der Zeitaufwand und damit die Entwicklungskosten für die Soft- und Firmware können auf diese Weise ebenfalls gesenkt werden.

Weitere vorteilhafte Ausführungsformen der Erfindung sind der Beschreibung, den Unteransprüchen sowie den Zeichnungen zu entnehmen.

Gemäß einer ersten vorteilhaften Ausführungsform wird der erste eindeutige Identifizierer auch durch die Verwendung einer Hash-Funktion erzeugt. Die Hash-Funktion kann auch als Falltürfunktion bzw. Einwegfunktion bezeichnet werden. Der erste eindeutige Identifizierer kann also einen Hashwert umfassen, der durch Anwenden der Hash-Funktion auf den Quellcode, den ausführbaren Code und die Identifikation des Geräts generiert wird. Bei der Hash-Funktion kann es sich beispielsweise um die SHA256-Funktion, die MD4- oder MD5-Funktion handeln.

Anstelle der Hash-Funktion oder zusätzlich kann auch eine Quersumme oder eine Datenparität oder eine Kombination aus mehreren Verfahren als erster eindeutiger Identifizierer verwendet werden.

Alternativ oder zusätzlich kann der erste eindeutige Identifizierer auch eine URI (Uniform Resource Identificator) oder eine URL (Uniform Resource Locator), insbesondere einen http-Link, umfassen. Der http-Link kann auf die Speichereinrichtung verweisen, in welcher die übertragenen Daten, der Quellcode und der erste eindeutige Identifizierer gespeichert sind.

Bei der Verwendung einer Hash-Funktion ist es von Vorteil, dass die Integrität der zusammen mit dem ersten eindeutigen Identifizierer gespeicherten Daten überprüft werden kann. Durch eine nachträgliche Veränderung der gespeicherten Daten würde sich auch ein durch die Hash-Funktion erzeugter Hash-Wert ändern, wodurch sich auch der erste eindeutige Identifizierer verändert. Eine solche Veränderung kann deshalb durch die nochmalige Anwendung der Hash-Funktion auf die gespeicherten Daten festgestellt werden. Insbesondere bei der Herstellung von Medikamenten und Lebensmitteln können somit die dort geltenden strengen Anforderungen an die Nachverfolgbarkeit von Produktionsprozessen auf sichere Weise erfüllt werden.

Gemäß einer weiteren vorteilhaften Ausführungsform wird der erste eindeutige Identifizierer auf der Grundlage einer auf das Gerät übertragenen Firmware und/oder einer auf das Gerät übertragenen Konfiguration erzeugt. Mittels des ersten eindeutigen Identifizierers ist somit nachvollziehbar, welche Firmware und/oder welche Konfiguration auf einem bestimmten Gerät vorhanden sind. Folglich ist es möglich, gezielt Geräte beispielsweise mit veralteter Firmware zu identifizieren und im Zuge von Wartungen auf die jeweils aktuelle Firmware zu aktualisieren. Zu diesem Zweck können auch die jeweils aktuelle Firmware und die übertragene Konfiguration auf die Speichereinrichtung hochgeladen werden.

Gemäß einer weiteren vorteilhaften Ausführungsform der Erfindung wird der erste eindeutige Identifizierer auch auf der Grundlage einer auf das Gerät übertragenen ausführbaren Anwendungsdatei und/oder von auf das Gerät übertragenen Parametern erzeugt. Auf diese Weise sind auch die jeweils von den Geräten ausgeführten Applikationen sowie die dazu verwendeten Parameter nachverfolgbar. Die Anwendungsdatei und die Parameter können dazu in der Speichereinrichtung gespeichert werden.

Die ausführbare Anwendungsdatei stellt dabei die von dem Gerät ausgeführte Benutzerapplikation dar, wobei die Benutzerapplikation auf die von der Firmware bereitgestellten Funktionen des Geräts zugreift. Die Firmware kann somit das Betriebssystem des Geräts sein, dessen Funktionalität mittels der Konfiguration einstellbar ist. Die Benutzerapplikation kann auch als Software oder Applikationscode bezeichnet werden.

Bevorzugt wird der erste eindeutige Identifizierer auch auf der Grundlage eines zweiten eindeutigen Identifizierers erzeugt, welcher auf einem von dem Programmiersystem generierten Quellcode und zumindest einem aus dem Quellcode erzeugten ausführbaren Code beruht. Der ausführbare Code kann hierbei eine Anwendungsdatei sein. Der zweite eindeutige Identifizierer wird z.B. ebenfalls mittels eines Hash-Verfahrens erzeugt, wobei die dazu verwendete Hash-Funktion den Quellcode und die daraus erzeugte (kompilierte) Anwendungsdatei als Eingang verwendet.

Zudem kann der zweite eindeutige Identifizierer auch auf der Grundlage einer Identifikation des Programmiersystems erzeugt werden. Die Identifikation des Programmiersystems kann beispielsweise die Seriennummer des verwendeten Computers, der Name des Programmierers, ein Lizenzschlüssel der verwendeten Software und dergleichen sein.

Weiter bevorzugt wird der erste eindeutige Identifizierer derart erzeugt, dass der zweite eindeutige Identifizierer aus dem ersten eindeutigen Identifizierer ermittelbar ist. Zu diesem Zweck kann der zweite eindeutige Identifizierer beispielsweise an den ersten eindeutigen Identifizierer angehängt werden. Alternativ kann eine Hash-Funktion verwendet werden, aus welcher der zweite eindeutige Identifizierer auch nach Anwendung der Hash-Funktion ermittelbar bleibt.

Durch die Kombination der zwei eindeutigen Identifizierer ist es somit möglich, zusätzlich herauszufinden, von welchem Programmiersystem und/oder von welchem Entwickler der auf einem bestimmten Gerät vorhandene Code stammt. Beispielsweise beim Auftreten von Fehlern in den Geräten kann dann eine lückenlose Nachverfolgung des verwendeten Programmiersystems und des Quellcodes erfolgen.

Gemäß einer weiteren vorteilhaften Ausführungsform ist die Identifikation des Geräts und/oder des Programmiersystems eine MAC-Adresse (Media-Access-Control-Adresse) und/oder eine Seriennummer eines Speichermediums und/oder eine Seriennummer einer CPU (Central Processing Unit) und/oder eine andere eindeutige Identifikation des Geräts oder des Programmiersystems. Die Identifikation des Geräts und des Programmiersystems kann somit auf Informationen beruhen, die einmalig sind. Dabei kann die Identifikation des Geräts bevorzugt über das Speichermedium erfolgen, so dass der Austausch der CPU bei dem Gerät ohne Probleme möglich ist. Ein solcher Austausch der CPU wird üblicherweise bei Embedded-Geräten für Prozesssteuerungen vorgenommen.

Besonders bevorzugt ist die Speichereinrichtung ein von dem Programmiersystem entfernt angeordneter Server, an welchen die übertragenen Daten und der erste eindeutige Identifizierer insbesondere mittels eines Internetprotokolls übermittelt werden. Aufgrund der Übertragung der Daten an den entfernten Server kann in dem Server eine zentrale Datenbank angelegt werden, die beispielsweise Aufschluss über den auf sämtlichen Geräten eines Unternehmens befindlichen Code und den zugehörigen Code-Versionen gibt. Insbesondere bei großen Unternehmen, die eine Vielzahl von Geräten im Einsatz haben, wird auf einfache Art und Weise ein Überblick über sämtliche Geräte und deren Code- bzw. Applikationsversionen geschaffen. Die Übertragung der Daten an den Server kann vollautomatisch erfolgen, so dass die Aktualität der auf dem Server gespeicherten Daten sichergestellt werden kann. Insbesondere werden die Daten von dem Programmiersystem an den Server übertragen, sobald das Programmiersystem eine Datenverbindung zu dem Server herstellen kann.

Bei der Verwendung des Servers ist von Vorteil, dass Speicherplatz auf dem Server nur geringe Kosten verursacht. Insbesondere kann auf dem Server auch der Quellcode gespeichert werden, auf dessen Grundlage die an das jeweilige Gerät übertragenen Daten erzeugt sind. Es ist folglich nicht mehr notwendig, den Quellcode auch auf dem Gerät zu speichern, wodurch wiederum Speicherbedarf auf dem Gerät eingespart wird.

Der Server kann zudem über ein Rechte-Management verfügen, wodurch sich beispielsweise abgetrennte Speicherbereiche für verschiedene Kunden eines Unternehmens oder für verschiedene Abteilungen erstellen lassen. Die Daten auf dem Server können zudem verschlüsselt vorliegen, wobei der erste eindeutige Identifizierer als Grundlage für die Verschlüsselung dienen kann.

Weiterhin offenbart wird ein Verfahren zur nachverfolgbaren Generierung von Code, insbesondere von Applikationscode bzw. ausführbarem Code für Embedded-Geräte, bei welchem
a) ein Quellcode in ausführbaren Code überführt (kompiliert) wird,
b) der Quellcode und der ausführbare Code zur Erzeugung eines zweiten eindeutigen Identifizierers verwendet werden, und
c) der Quellcode, der ausführbare Code und der zweite eindeutige Identifizierer in einer entfernten Speichereinrichtung gespeichert werden.

Der ausführbare Code kann eine Geräteapplikation oder eine Firmware sein. Diese können durch Kompilieren, Linken und Locaten des Quellcodes entstehen. Sämtliche Verfahrensschritte können dabei automatisch ausgeführt werden, wodurch in der entfernten Speichereinrichtung eine Datenbank mit Quellcode, ausführbarem Code und den jeweils zugeordneten zweiten eindeutigen Identifizierern entsteht. In der Folge ist ein Überblick über sämtliche Versionen des Quellcodes und des daraus erzeugten ausführbaren Codes möglich. Insbesondere bei größeren Entwicklungsprojekten mit mehreren Entwicklern kann auf diese Weise ein Überblick über die verschiedenen Versionen des Quellcodes gewahrt werden. Auch können die Entwickler die jeweils aktuellste Version des Quellcodes von der entfernten Speichereinrichtung herunterladen. Das erfindungsgemäße Verfahren kann somit als Ersatz zu Softwareversions-Verwaltungssystemen oder als Ergänzung dienen.

Gemäß einer vorteilhaften Ausführungsform umfasst der ausführbare Code sämtliche zur Ausführung auf einem Gerät benötigten Artefakte. Der ausführbare Code beinhaltet somit beispielsweise benötigte Konfigurationsdateien, Parameter, Bibliotheken wie z.B. Dynamic Link Libraries (DLLs) und dergleichen. Auf dem Gerät werden somit keine vorhandenen Daten vorausgesetzt, um die Ausführbarkeit der Firmware und/oder eines Anwenderprogramms bzw. Applikationscodes zu ermöglichen.

Weiter offenbart wird ein Verfahren zur nachverfolgbaren Veränderung der Programmierung eines Geräts, insbesondere eines Embedded-Geräts, bei welchem
a) eine Datenverbindung eines Programmiersystems mit dem Gerät hergestellt wird,
b) ein erster eindeutiger Identifizierer von dem Gerät an das Programmiersystem übermittelt oder von dem Programmiersystem erzeugt wird,
c) das Programmiersystem den ersten eindeutigen Identifizierer an eine unabhängige Speichereinrichtung übermittelt,
d) die unabhängige Speichereinrichtung an das Programmiersystem zumindest die in der Speichereinrichtung unter Bezugnahme auf den ersten eindeutigen Identifizierer gespeicherten Daten überträgt, wobei die Daten zumindest einen Quellcode umfassen,
e) die von der Speichereinrichtung empfangenen Daten mittels des Programmiersystems verändert werden,
f) von dem Programmiersystem auf das Gerät Daten übertragen werden, wobei die übertragenen Daten von dem Gerät ausführbaren Code enthalten, welcher aus dem veränderten Quellcode erzeugt ist,
g) ein neuer erster eindeutiger Identifizierer erzeugt wird, der auf zumindest einem Teil der übertragenen Daten und zumindest einem Teil des veränderten Quellcodes sowie auf einer Identifikation des Geräts beruht,
h) der neue erste eindeutige Identifizierer in dem Gerät gespeichert wird, und
i) die übertragenen Daten und der neue erste eindeutige Identifizierer in der unabhängigen Speichereinrichtung gespeichert werden.

Die Kommunikation mit der Speichereinrichtung kann beispielsweise mittels einer Datenverbindung, insbesondere über das Internet erfolgen. Gegebenenfalls kann hierzu eine gesicherte, verschlüsselte Verbindung verwendet werden, wobei das Programmiersystem mit der Speichereinrichtung kommuniziert. Alternativ kann auch das Gerät den Quellcode direkt von der Speichereinrichtung empfangen und an das Programmiersystem weiterleiten. Bei der Speichereinrichtung kann es sich um einen Server mit einem sogenannten Cloud-Storage handeln, der von dem Gerät und dem Programmiersystem getrennt angeordnet ist.

Bei dem erfindungsgemäßen Verfahren zur nachverfolgbaren Veränderung der Programmierung eines Geräts ist von Vorteil, dass der erste eindeutige Identifizierer angibt, welcher ausführbare Code auf dem jeweiligen Gerät vorhanden ist, so dass bei der Weiterentwicklung des Codes mit der jeweils auf dem Gerät vorhandenen Version weitergearbeitet werden kann. Die Konsistenz verschiedener Versionen kann somit sichergestellt werden.

Durch die Erzeugung eines neuen ersten eindeutigen Identifizierers wird der Veränderung des Quellcodes und damit auch der Veränderung des ausführbaren Codes Rechnung getragen. Mit der Speicherung des neuen ersten eindeutigen Identifizierers in der Speichereinrichtung können in der Speichereinrichtung die Veränderungen nachvollzogen werden. Die Weiterentwicklung des Quellcodes ist somit transparent und auf einfache Weise nachverfolgbar.

Im Übrigen gelten die für das Verfahren zur nachverfolgbaren Programmierung eines Geräts und das Verfahren zur nachverfolgbaren Generierung von Code getroffenen Aussagen.

Grundsätzlich eignen sich die Verfahren nicht nur zur Programmierung von Embedded-Geräten sondern auch zur Erstellung jeglicher Software, beispielsweise auf Personal Computern (PCs) oder Servern.

Nachfolgend wird die Erfindung rein beispielhaft unter Bezugnahme auf die Zeichnungen beschrieben. Es zeigen:
- Fig. 1: eine schematische Ansicht des Zusammenwirkens von Gerät, Programmiersystem und Speichereinrichtung;
- Fig. 2: eine Datenstruktur der Speichereinrichtung in schematischer Ansicht.

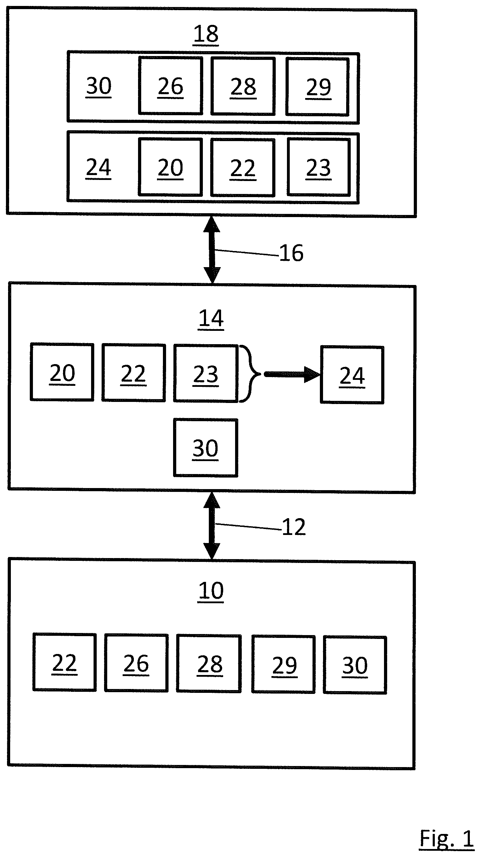

Fig. 1 zeigt schematisch ein Gerät, das eine speicherprogrammierbare Steuerung (SPS) 10 ist. Die SPS 10 ist mittels einer Datenverbindung 12 mit einem Programmiersystem 14 verbunden, der als Programmiersystem dient. Die Datenverbindung 12 ist eine Ethernet-Verbindung mittels eines lokalen Netzwerks (Local Area Network - LAN). Das Programmiersystem 14 wiederum ist über eine InternetVerbindung 16 mit einem Cloud-Server 18 verbunden.

Zur Programmierung der SPS 10 wird zunächst auf dem Programmiersystem 14 ein Quellcode 20 erstellt, der durch eine (nicht dargestellte) Programmierumgebung in einen ausführbaren Code, d.h. in ein Executable 22 überführt wird. Nach dem Erstellen des Executables 22 wird aus dem Quellcode 20, dem Executable 22 und einer Seriennummer 23 des Programmiersystems 14 ein zweiter eindeutiger Identifizierer 24 erzeugt. Anstelle der Seriennummer 23 des Programmiersystems 14 kann auch jede andere Identifikation des Programmiersystems 14 verwendet werden.

Der zweite eindeutige Identifizierer 24, der Quellcode 20, das Executable 22 und die Seriennummer 23 des Programmiersystems 14 werden dann an den Cloud-Server 18 übertragen und dort gespeichert. Bei der Speicherung in dem Cloud-Server 18 dient der zweite eindeutige Identifizierer 24 zur Zuordnung der in dem Cloud-Server 18 gespeicherten Daten zu einem jeweiligen Programmiersystem 14.

Anschließend wird das Executable 22 mittels der Datenverbindung 12 auf die SPS 10 übertragen. Das Executable 22 umfasst dabei eine Anwenderapplikation. Die Anwenderapplikation wird unter Berücksichtigung einer von dem Programmiersystem 14 erstellten und ebenfalls an die SPS 10 übertragenen Konfiguration 26 und einer Firmware 28 der SPS 10 von der SPS 10 ausgeführt.

Die Anwenderapplikation des Executables 22 kann beispielsweise eine Motorsteuerung für eine Lebensmittel verarbeitende Anlage umfassen. Zur Steuerung von angeschlossenen Motoren verfügt die SPS 10 über eine (nicht dargestellte) Feldbus-Schnittstelle.

Anschließend erzeugt das Programmiersystem 14 aus dem Quellcode 20, dem Executable 22, dem zweiten eindeutigen Identifizierer 24, der Konfiguration 26, der Firmware 28 und einer Seriennummer 29 einer (nicht dargestellten) Speicherkarte der SPS 10 einen ersten eindeutigen Identifizierer 30. Der erste eindeutige Identifizierer 30 wird dabei mittels einer Hash-Funktion derart erzeugt, dass der zweite eindeutige Identifizierer 24 aus dem ersten eindeutigen Identifizierer 30 ermittelbar ist. Der erste eindeutige Identifizierer 30 wird an die SPS 10 übermittelt und dort gespeichert.

Zudem wird der erste eindeutige Identifizierer 30 zusammen mit der Konfiguration 26, der Firmware 28 und der Seriennummer 29 der Speicherkarte an den Cloud-Server 18 übertragen und dort gespeichert.

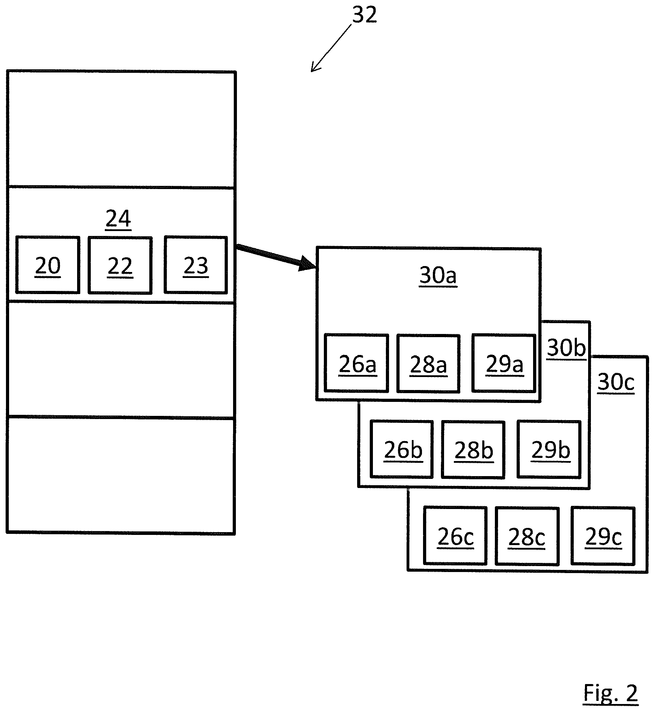

Fig. 2 zeigt eine Datenstruktur 32, gemäß welcher Daten in dem Cloud-Server 18 gespeichert werden. Die Dateneinträge der Datenstruktur 32 sind dabei zunächst nach dem zweiten eindeutigen Identifizierer 24 geordnet, wobei in Fig. 2 beispielhaft ein einzelner zweiter eindeutiger Identifizierer 24 gezeigt ist. Die Dateneinträge bilden generell Instanzen aus Quellcode 20, Executable 22 und dem zweiten eindeutigen Identifizierer 24.

Der zweite eindeutige Identifizierer 24 repräsentiert dabei eine bestimmte Kombination aus Quellcode 20, Executable 22 und Programmiersystem 14, wobei das Programmiersystem 14 durch die Seriennummer 23 des Programmiersystems 14 repräsentiert wird. Mit dem Eintrag für den zweiten eindeutigen Identifizierer 24 in der Datenstruktur 32 sind sämtliche auf dem gleichen Quellcode 20 und dem gleichen Executable 22 beruhenden ersten eindeutigen Identifizierer 30 verknüpft. Beispielhaft sind in Fig. 2 drei erste eindeutige Identifizierer 30a, 30b, 30c gezeigt, die jeweils durch Übermittlung des zu dem zweiten eindeutigen Identifizierer 24 gehörenden Executables 22 an verschiedene Geräte erzeugt wurden. Zusammen mit dem jeweiligen ersten eindeutigen Identifizierer 30a, 30b, 30c ist die jeweilige Konfiguration 26a, 26b, 26c und die auf der jeweiligen SPS 10 verwendete Firmware 28a, 28b, 28c hinterlegt. Ebenfalls ist die jeweilige Seriennummer 29a, 29b, 29c der Speicherkarte der jeweiligen SPS 10 gespeichert.

Anhand der Datenstruktur 32 und insbesondere aufgrund der Seriennummer 29a, 29b, 29c der Speicherkarte kann somit auf einfache Weise herausgefunden werden, welcher Quellcode 20 auf welcher SPS 10 unter welcher Konfiguration und welcher Firmware 28 verwendet wird. Auch bei großen Entwicklungsprojekten mit vielen beteiligten Entwicklern und einer Vielzahl von verwendeten SPS-Geräten 10 kann somit ein Überblick über die vorhandenen Softwareversionen auf den jeweiligen Geräten gewahrt werden.

### Bezugszeichenliste

- 10: SPS
- 12: Datenverbindung
- 14: Programmiersystem
- 16: Internetverbindung
- 18: Cloud-Server
- 20: Quellcode
- 22: Executable
- 23: Seriennummer des Programmiersystems
- 24: zweiter eindeutiger Identifizierer
- 26: Konfiguration
- 28: Firmware
- 29: Seriennummer der Speicherkarte
- 30: erster eindeutiger Identifizierer
- 32: Datenstruktur

## Patentansprüche

1. Verfahren zur nachverfolgbaren Programmierung und/oder Konfigurierung eines Geräts (10), insbesondere eines Embedded-Geräts, bei welchem
(a) von einem Programmiersystem (14) auf das Gerät (10) Daten übertragen werden, wobei die übertragenen Daten von dem Gerät (10) ausführbaren Code (22) enthalten und aus einem Quellcode (20) erzeugt sind,
**dadurch gekennzeichnet, dass**
(b) auf der Grundlage zumindest eines Teils der übertragenen Daten und zumindest eines Teils des Quellcodes (22) sowie einer Identifikation (29) des Geräts (10) ein erster eindeutiger Identifizierer (30) erzeugt wird,
(c) der erste eindeutige Identifizierer (30) in dem Gerät (10) gespeichert wird, und
(d) zumindest die für den ersten eindeutigen Identifizierer (30) verwendeten übertragenen Daten, der für den ersten eindeutigen Identifizierer (30) verwendete Quellcode (20) und der erste eindeutige Identifizierer (30) in einer von dem Gerät (10) unabhängigen Speichereinrichtung (18) gespeichert werden.

2. Verfahren nach Anspruch 1,
**dadurch gekennzeichnet, dass**
der erste eindeutige Identifizierer (30) durch die Verwendung einer Hash-Funktion erzeugt wird.

3. Verfahren nach Anspruch 1 oder 2,
**dadurch gekennzeichnet, dass**
der erste eindeutige Identifizierer (30) auf der Grundlage einer auf das Gerät (10) übertragenen Firmware (28) und/oder einer auf das Gerät (10) übertragenen Konfiguration (26) erzeugt wird.

4. Verfahren nach zumindest einem der vorstehenden Ansprüche,
**dadurch gekennzeichnet, dass**
der erste eindeutige Identifizierer (30) auch auf einer auf das Gerät (10) übertragenen ausführbaren Anwendungsdatei (22) und/oder auf das Gerät (10) übertragenen Parametern beruht.

5. Verfahren nach zumindest einem der vorstehenden Ansprüche,
**dadurch gekennzeichnet, dass**
der erste eindeutige Identifizierer (30) auch auf einem zweiten eindeutigen Identifizierer (24) beruht, welcher auf einem auf dem Programmiersystem (14) erzeugten Quellcode (20) und zumindest einem aus dem Quellcode (20) erzeugten ausführbaren Code (22) beruht.

6. Verfahren nach Anspruch 5,
**dadurch gekennzeichnet, dass**
erste eindeutige Identifizierer (30) derart erzeugt wird, dass der zweite eindeutige Identifizierer (24) aus dem ersten eindeutigen Identifizierer (30) ermittelbar ist.

7. Verfahren nach zumindest einem der vorstehenden Ansprüche,
**dadurch gekennzeichnet, dass**
die Identifikation des Geräts (10) und/oder des Programmiersystems (14) eine MAC-Adresse und/oder eine Seriennummer (29) eines Speichermediums und/oder eine Seriennummer (23) einer CPU und/oder eine andere eindeutige Identifikation des Geräts (10) oder des Programmiersystems (14) ist.

8. Verfahren nach zumindest einem der vorstehenden Ansprüche,
**dadurch gekennzeichnet, dass**
die Speichereinrichtung ein von dem Programmiersystem (14) entfernt angeordneter Server (18) ist, an welchen die übertragenen Daten und der erste eindeutige Identifizierer (30) insbesondere mittels eines Internetprotokolls übermittelt werden.

## Claims

1. A method for the traceable programming and/or configuring of a device (10), in particular of an embedded device, in which
(a) data are transmitted to the device (10) from a programming system (14), with the transmitted data including code (22) executable by the device (10) and being generated from a source code (20);
**characterized in that**
(b) a first unique identifier (30) is produced on the basis of at least some of the transmitted data and of at least some of the source code (22) and of an identification (29) of the device (10);
(c) the first unique identifier (30) is stored in the device (10); and
(d) at least the transmitted data used for the first unique identifier (30), the source code (20) used for the first unique identifier (30) and the first unique identifier (30) are stored in a memory device (18) independent of the device (10).

2. A method in accordance with claim 1,
**characterized in that**
the first unique identifier (30) is generated by the use of a hash function.

3. A method in accordance with claim 1 or claim 2,
**characterized in that**
the first unique identifier (30) is generated on the basis of firmware (28) transmitted to the device (10) and/or on the basis of a configuration (26) transmitted to the device (10).

4. A method in accordance with at least one of the preceding claims,
**characterized in that**
the first unique identifier (30) is also based on an executable application file (22) transmitted to the device (10) and/or on parameters transmitted to the device (10).

5. A method in accordance with at least one of the preceding claims,
**characterized in that**
the first unique identifier (30) is also based on a second unique identifier (24) which is based on a source code (20) generated on the programming system (14) and on at least one executable code (22) generated from the source code (20).

6. A method in accordance with claim 5,
**characterized in that**
the first unique identifier (30) is generated such that the second unique identifier (24) can be determined from the first unique identifier (30).

7. A method in accordance with at least one of the preceding claims,
**characterized in that**
the identification of the device (10) and/or of the programming system (14) is a MAC address and/or a serial number (29) of a storage medium and/or a serial number (23) of a CPU and/or another unique identification of the device (10) or of the programming system (14).

8. A method in accordance with at least one of the preceding claims,
**characterized in that**
the memory device is a server (18) which is arranged remote from the programming system (14) and to which the transmitted data and the first unique identifier (30) are in particular transferred by means of an internet protocol.

## Revendications

1. Procédé pour la programmation et/ou la configuration traçables d'un appareil (10), en particulier d'un appareil intégré, dans lequel
(a) des données sont transférées d'un système de programmation (14) à l'appareil (10), les données transférées contenant un code (22) exécutable par l'appareil (10) et étant générées à partir d'un code source (20), **caractérisé en ce que**
(b) un premier identifiant unique (30) est généré sur la base d'au moins une partie des données transférées et d'au moins une partie du code source (22) et d'une identification (29) de l'appareil (10),
(c) le premier identifiant unique (30) est stocké dans l'appareil (10), et
(d) au moins les données transférées utilisées pour le premier identifiant unique (30), le code source (20) utilisé pour le premier identifiant unique (30) et le premier identifiant unique (30) sont stockés dans un dispositif de stockage (18) indépendant de l'appareil (10).

2. Procédé selon la revendication 1,
**caractérisé en ce que**
le premier identifiant unique (30) est généré par l'utilisation d'une fonction de hachage.

3. Procédé selon la revendication 1 ou 2,
**caractérisé en ce que**
le premier identifiant unique (30) est généré sur la base d'un micrologiciel (28) transféré à l'appareil (10) et/ou d'une configuration (26) transférée à l'appareil (10).

4. Procédé selon l'une au moins des revendications précédentes,
**caractérisé en ce que**
le premier identifiant unique (30) est également basé sur un fichier d'application exécutable (22) transféré à l'appareil (10) et/ou sur les paramètres transférés à l'appareil (10).

5. Procédé selon l'une au moins des revendications précédentes,
**caractérisé en ce que**
le premier identifiant unique (30) est également basé sur un deuxième identifiant unique (24) qui est basé sur un code source (20) généré sur le système de programmation (14) et sur au moins un code exécutable (22) généré à partir du code source (20).

6. Procédé selon la revendication 5,
**caractérisé en ce que**
le premier identifiant unique (30) est généré de telle sorte que le deuxième identifiant unique (24) peut être déterminé à partir du premier identifiant unique (30).

7. Procédé selon l'une au moins des revendications précédentes,
**caractérisé en ce que**
l'identification de l'appareil (10) et/ou du système de programmation (14) est une adresse MAC et/ou un numéro de série (29) d'un support de stockage et/ou un numéro de série (23) d'une CPU et/ou une autre identification unique de l'appareil (10) ou du système de programmation (14).

8. Procédé selon l'une au moins des revendications précédentes,
**caractérisé en ce que**
le dispositif de stockage est un serveur (18) situé à distance du système de programmation (14), auquel les données transférées et le premier identifiant unique (30) sont transmis en particulier au moyen d'un protocole Internet.
